# EUROPEAN PATENT APPLICATION

(11) **EP 1 321 861 A1**
(43) Date of publication of application: **25.06.2003**
(21) Application number: 01954346.1
(22) Date of filing: 26.07.2001
(51) Int. Cl.: G06F 17/30, G06F 17/60

(54) **PARTS/MAINTENANCE MATERIALS RETRIEVING SYSTEM, SERVER THEREFOR, USER TERMINAL, AND RECORDING MEDIUM THEREFOR**

(30) Priority: 22.09.2000 JP 2000289512; 10.10.2000 JP 2000308639
(71) Applicant: Honda Giken Kogyo Kabushiki Kaisha, Minato-ku, Tokyo 107-8556 (JP)
(72) Inventor: FUKUDA, Kouji, Honda Giken Kogyo Kabushiki Kaisha, Tokyo 107-8556 (JP); MOTOHASHI, Taku, Honda Giken Kogyo K.K., Tokyo 107-8556 (JP)
(74) Representative: Jordan, Volker, Dr.
(86) International application number: JP0106440
(87) International publication number: WO02025492

(57) **Abstract**

A simple retrieve system utilizing a network, and a server, a user terminal and a record medium for the system are provided. General users can specify exact necessary parts and maintenance materials easily based on complete data. The system includes a server and a user terminal capable of communicating with each other through a network. The server comprises a product-parts data base having complete data of products and parts recorded so as to be retrieved, retrieve means for retrieving from the product-parts data base parts data or maintenance data informed from the user terminal, and server side transmission means. The user terminal comprises display means for displaying the parts data or the maintenance data on a display picture surface, and user side transmission means for transmitting parts indicating information etc. to the server.

## Description

### Technical Field

The present invention relates to a parts-maintenance materials retrieving system utilizing a network, and a server and a user terminal constituting the system, and a medium with a program for controlling the server recorded.

### Background Art

When exchange of parts becomes necessary on maintenance or inspection of a product, firstly the parts must be specified for ordering. In many products, in order to carry out removal, attachment and exchange of parts exactly, work must be carried out according to a maintenance manual.

In case of vehicles such as motorcar and motorcycle or general machines, for example, parts are different according to kind of machine, type and year. Therefore, it is necessary to specify exact parts.

Therefore, there are parts lists and service manuals provided by makers as information sources. However, the parts lists and the service manuals available for general users are made in forms of books.

Therefore, retrieve of parts and maintenance method necessitates retrieve from enormous pages to take time and labor. Retrieve of maintenance data fitting for a sort of machine possessed by a user is carried out based on type of vehicle, model type, year, frame number and matters recorded in certificate of car-examination, so that some expert knowledge and familiarity to manual are required.

If retrieve is carried out using a book not reflecting reversion information such as parts change after purchase of vehicle, there is large possibility that parts and method of attachment are mistaken.

Since parts are recorded in a parts list and necessary supplemental or protecting member such as tools and adhesives are recorded in a service manual, both the parts list and the service manual must be checked on ordering the parts. Therefore, retrieve takes time, preparation of necessary tools is apt to be failed, and there is a trouble that the service manual must be referred again when the obtained parts is attached.

There is an example that parts can be ordered in a electronic commercial transaction utilizing a network. However, regarding vehicle parts which differ according to type and year of the vehicle, it is nearly impossible to specify an exact necessary parts in a state that there are not complete data of parts list and service manual. Further, when parts and tools found out are ordered, they must be posted in a order sheet, and at that time posting miss is apt to occur.

Therefore, usually, general users leave the parts exchanging work to maintenance specialty shops paying cost of labor.

### Disclosure of Invention

The present invention has been accomplished in view of the foregoing and an object of the invention is to provide a simple retrieve system utilizing a network, and a server, a user terminal and a record medium for the system in which general users can specify easily exact necessary parts and maintenance information based on complete data.

Another object of the invention is to provide a server capable of realize an electronic commercial transaction in which exact parts can be ordered quickly and surely.

In order to achieve the above objects, the present invention provides a parts retrieving system including a server and a user terminal capable of communicating with each other through a network, said server comprising: a product-parts data base having complete data of products and parts recorded so as to be retrieved including picture data of said products and said parts; retrieve means for retrieving from said product-parts data base, product picture data responding to product specifying information transmitted from said user terminal for specifying a product relating to parts to be retrieved, parts group picture data responding to parts group indicating information transmitted from said user terminal for indicating a required parts group, and parts data responding to parts indicating information transmitted from said user terminal for indicating parts to be retrieved; and server side transmission means for transmitting said product picture data, said parts group picture data and said parts data retrieved by said retrieve means to said user terminal, said user terminal comprising: display means for displaying said product picture data , said parts group picture data and said parts data transmitted from said server side transmission means on a display surface; and user side transmission means for transmitting said product specifying information, said parts group indicating information and said parts indicating information to said server.

The server is provided with the product-parts data base having complete data of products and parts recorded so as to be retrieved including picture data of the products and the parts, and transmits the product picture data, the parts group picture data and the pats data relating to parts to be retrieved to the user terminal. On the user terminal side, the product picture data, the parts group picture data and the parts data relating to parts to be retrieved transmitted from the server are displayed by the display means. Therefore, users can specify parts to be retrieved watching exact product picture and parts group picture based on complete data of products and parts and indicating necessary portions in order, so that exact necessary parts can be retrieved easily utilizing the network and exact parts data can be obtained quickly.

The present invention provides a parts retrieving system including a server and a user terminal capable of communicating with each other through a network, said server comprising: a product-parts data base having complete data of products and parts recorded so as to be retrieved including picture data of said products and said parts; retrieve means for retrieving from said product-parts data base, product picture data responding to product specifying information transmitted from said user terminal for specifying a product relating to parts to be retrieved, enlarged picture data responding to enlarged picture indicating information transmitted from said user terminal for indicating a required portion of said product picture, parts group picture data responding to parts group indicating information transmitted from said user terminal for indicating a required parts group, and parts data responding to parts indicating information transmitted from said user terminal for indicating parts to be retrieved; and server side transmission means for transmitting said product picture data, said enlarged picture data, said parts group picture data and said parts data retrieved by said retrieve means to said user terminal, said user terminal comprising: display means for displaying said product picture data, said enlarged picture data, said parts group picture data and said parts data transmitted from said server side transmission means on a display surface; and user side transmission means for transmitting said product specifying information, said enlarged picture indicating information, said parts group indicating information and said parts indicating information to said server.

The server is provided with the product-parts data base with complete data of products and parts, and transmits the enlarged picture data responding to the enlarged picture indicating information in addition to the product picture data, the parts group picture data and the parts data. Therefore, users can indicate parts to be retrieved exactly based on the enlarged picture, so that necessary parts can be specified more easily.

The present invention provides a server comprising: a product-parts data base having complete data of products and parts recorded so as to be retrieved including picture data of said products and said parts; retrieve means for retrieving from said product-parts data base, product picture data responding to product specifying information transmitted from a user terminal through a network for specifying a product relating to parts to be retrieved, parts group picture data responding to parts group indicating information transmitted from said user terminal through said network for indicating a required parts group, and parts data responding to parts indicating information transmitted from said user terminal through said network for indicating parts to be retrieved; and transmission means for transmitting said product picture data, said parts group picture data and said parts data retrieved by said retrieve means to said user terminal.

The server is provided with the product-parts data base having complete data of products and parts including picture data, retrieves the product picture data, the parts group picture data and the parts data based on the product specifying information, the parts group indicating information and the parts indicating information from the product-parts data base exactly, and transmits them to the user terminal. Therefore, the user can specify necessary parts easily and quickly.

The present invention provides a server comprising: a product-parts data base having complete data of products and parts recorded so as to be retrieved including picture data of said products and said parts; retrieve means for retrieving, from said product-parts data base, product picture data responding to product specifying information transmitted from a user terminal through a network for specifying a product relating to parts to be retrieved, parts group picture data responding to parts group indicating information transmitted from said user terminal through said network for indicating a required parts group, and parts data responding to parts indicating information transmitted from said user terminal through said network for indicating parts to be retrieved; transmission means for transmitting said product picture data, said parts group picture data and said parts data retrieved by said retrieve means to said user terminal; order sheet transmitting means for transmitting an order sheet to said user terminal responding to order requirement transmitted from said user terminal; and order accepting means for accepting said order sheet with said retrieved parts data wrote in transmitted from said user terminal.

The server can retrieve easily exact parts necessary for the user from the product-parts data base having complete data of products and parts recorded so as to be retrieved including picture data of the products and the parts by the data transmission means and the retrieve means, and accepts the order sheet with exact parts data wrote in by the order accepting means. Therefore, order of exact parts can be accepted quickly and surely.

The present invention provides a server comprising: a product-parts data base having complete data of products and parts recorded so as to be retrieved including picture data of said products and said parts; customer data base with data of customers recorded; retrieve means for retrieving, from said customer data base and said product-parts data base, product picture data responding customer information transmitted from a user terminal through a network, and retrieving from said product-parts data base, parts group picture data responding to parts group indicating information transmitted from said user terminal for indicating required parts group relating to parts to be retrieved, and parts data responding to parts indicating information transmitted from said user terminal for indicating parts to be retrieved; and transmission means for transmitting said product picture data, said parts group picture data and said parts data retrieved by said retrieve means to said user terminal in a mode that said data can be displayed at said user terminal.

The server has the customer data base with data of customers recorded in addition to the product-parts data base, and can specify a product relating to parts to be retrieved from the customer data base and the product-parts data base based on the customer information. Therefore, the product can be specified quickly and exactly and necessary parts can be specified more easily and quickly.

In the above-mentioned server, the product-parts data base includes complete data of products and parts comprising a part list and a service manual.

Since the product-parts data base includes complete data of products and parts comprising a part list with application information of parts, parts number and the like recorded and a service manual with information regarding parts attachment, maintenance method, exclusive tools and the like recorded, it is possible to retrieve exact parts surely.

The present invention provides a user terminal comprising: access means for obtaining access to a server having product-parts data base with complete data of products and parts recorded so as to be retrieved including picture data of said products and said parts; display means for displaying product picture data, parts group picture data and parts data transmitted from said server on a display surface; transmitting means for transmitting product specifying information for specifying product picture to be displayed by said display means, parts group indicating information for indicating required portion of said displayed product picture and parts indicating information for indicating required parts of said displayed parts group picture to said server.

The user terminal obtains access to the server having the product-parts data base, transmits product specifying information to display retrieved product picture, transmits parts group indicating information for indicating required portion of the displayed product picture to display retrieved parts group picture, and transmits parts indicating information for indicating required parts of the displayed parts group picture to display retrieved parts. Therefore, users can specify parts to be retrieved watching exact product picture and parts group picture based on complete data of products and parts and indicating necessary portions in order, so that exact necessary parts can be retrieved easily utilizing the network and exact parts data can be obtained quickly.

The present invention provides a record medium housing a program for controlling a computer so that: said computer responds to product specifying information relating to parts to be retrieved transmitted from a user terminal through a network and retrieve, from a product-parts data base having complete data of products and parts recorded so as to be retrieved including picture data of said products and said parts, corresponding product picture data to transmit said product picture data; said computer responds to information indicating a required portion of said transmitted product picture data and retrieves from said product-parts data base parts group picture data of said indicated portion to transmit said parts group picture data; and said computer responds to information indicating parts in said transmitted parts group picture data and retrieves from said product-parts data base parts data of said indicated parts to transmit said parts data.

According to the program, the computer responds to product specifying information transmitted from a user terminal to retrieve product picture data from the product-parts data base and transmit the product picture data, responds to information indicating a required portion of the transmitted product picture to retrieve from the product-parts data base parts group picture data and transmit the parts group picture data, and responds to information indicating parts in the transmitted parts group picture to retrieve from the product-parts data base parts data of the indicated parts and transmit the part data. Therefore, necessary parts can be retrieved exactly based on the data base having complete data of products and parts recorded including picture data, and easily utilizing a network.

The present invention provides a maintenance materials retrieving system including a server and a user terminal capable of communicating with each other through a network, said server comprising: product-parts data base having complete data of products and parts recorded so as to be retrieved including maintenance materials relating to a maintenance method; retrieve means for retrieving from said product-parts data base parts data and maintenance data relating to parts corresponding to parts specifying information transmitted from said user terminal for specifying said parts; and server side transmission means for transmitting said maintenance data retrieved by said retrieve means to said user terminal, said user terminal comprising: display means for displaying said maintenance data transmitted by said server side transmission means on a display surface; and user side transmission means for transmitting said parts specifying information to said server.

The server has exhaustive complete product-parts data base including maintenance materials relating to a maintenance method and retrieves from the product-parts data base corresponding parts data and maintenance data relating to the parts based on parts specifying information transmitted from the user terminal for transmitting the parts data and the maintenance data to the user terminal. And on the user terminal side, the maintenance data transmitted from the server is displayed by the display means. Therefore, users can obtain maintenance data exactly retrieved from the complete product-parts data base utilizing a network easily and quickly.

If the above-mentioned maintenance data includes degree of difficulty of work, the degree of difficulty is displayed simultaneously with the maintenance data at the user terminal. Therefore, users can easily judge whether they can accomplish the work or not from the degree of difficulty in view of their own technical skill.

If the above-mentioned maintenance data includes maintenance shop information, the display means of the user terminal displays the maintenance shop information together with maintenance data. When a user watches displayed maintenance method, judges that he can not accomplish the work in view of his own technical skill and decides to leave the work to a maintenance shop, he can know immediately a nearest maintenance shop from the maintenance shop information, so that time to search for a maintenance shop anew is saved conveniently.

The above-mentioned product-parts data base includes complete data of products and parts comprising a part list and a service manual.

Since the product-parts data base includes complete data of products and parts comprising the part list with application information of parts, parts number and the like recorded and the service manual with information regarding parts attachment, maintenance method, exclusive tools and the like recorded, exact maintenance data required by the user can be retrieved easily.

The present invention provides a server comprising: product-parts data base having complete data of products and parts recorded so as to be retrieved including maintenance materials relating to a maintenance method; retrieve means for retrieving from said product-parts data base parts data and maintenance data relating to parts corresponding to parts specifying information transmitted from a user terminal through a network for specifying said parts; and server side transmission means for transmitting said maintenance data retrieved by said retrieve means to said user terminal.

The server is provided with product-parts data base having complete data of products and parts including maintenance materials recorded, retrieves from the product-parts data base corresponding parts data and maintenance data relating to the parts based on parts specifying information transmitted from the user terminal, and transmits the retrieved data to the user terminal. Therefore, the user can obtain maintenance data exactly retrieved from the complete product-parts data base utilizing the network easily and quickly.

The present invention provides a server comprising: product-parts data base having complete data of products and parts recorded so as to be retrieved including maintenance materials relating to a maintenance method; storage means for storing a history of retrieves of parts carried out by an user; retrieve means for retrieving from said product-parts data base maintenance data relating to parts corresponding to parts selecting information transmitted from a user terminal through a network for selecting said parts from said history of retrieve; and server side transmission means for transmitting said maintenance data retrieved by said retrieve means to said user terminal.

The server is provided with product-parts data base comprising complete data of products and parts including picture data and storage means for storing a history of parts retrieves carried out by an user, and retrieves from the product-parts data base maintenance data relating to parts corresponding to parts selecting information transmitted from a user terminal through a network for selecting the parts from the history of retrieves. Therefore, the user can select parts from the history of retrieves easily and quickly, maintenance data relating to the parts can be retrieved more quickly as the parts is specified quickly, and the user can obtain necessary maintenance data quickly.

The present invention provides a user terminal comprising: access means for obtaining access to a server through a network; transmission means for transmitting parts specifying information to said server; and display means for displaying maintenance data transmitted from said server, said server comprising product-parts data base having complete data of products and parts recorded so as to be retrieved including maintenance materials relating to a maintenance method.

If the user approaches the server through the network and transmits parts specifying information, exact maintenance data retrieved from complete data of products and parts are obtained and displayed easily and quickly.

If the user terminal is provided with print means for printing pictures of the maintenance data displayed by the display means, the retrieved maintenance data can be printed on a paper for facilitating to refer to the data on maintenance work.

The present invention provides a record medium housing a program for controlling a computer so that parts specifying information transmitted from a user terminal through a network is received, and corresponding parts data and maintenance data are retrieved based on said transmitted parts specifying information from a product-parts data base having complete data of products and parts recorded so as to be retrieved including maintenance materials relating to a maintenance method.

The record medium houses a program for controlling a computer so that the computer retrieves from a complete product-parts data base maintenance data based on parts specifying information transmitted from a user terminal and transmits the maintenance data. Therefore, according to the record medium, a server can be controlled so that exact maintenance data are retrieved based on a data base having complete data of products and parts recorded, easily utilizing a network.

### Brief Description of Drawings

Fig. 1 is a view showing entire constitution of a system for parts retrieve and electronic commercial transaction utilizing a network;
Fig. 2 is a flow chart showing operation procedure in parts retrieve according to an embodiment of the present invention;
Fig. 3 is a flow chart showing operation procedure when a service manual is referred to;
Fig. 4 is a flow chart showing operation procedure when parts are ordered;
Fig. 5 is a flow chart showing another operation procedure when a service manual is referred to;
Fig. 6 is a view showing a picture surface with a machine sort picture displayed;
Fig. 7 is a view showing a picture surface with a selected vehicle picture displayed;
Fig. 8 is a view showing a picture surface with an enlarged picture and a block table displayed;
Fig. 9 is a view showing a picture surface with an illustration index displayed;
Fig. 10 is a view showing a picture surface with a required block page displayed;
Fig. 11 is a view showing a picture surface with an enlarged illustration picture displayed;
Fig. 12 is a view showing a picture surface with parts data displayed;
Fig. 13 is a view showing a picture surface with a required page of a service manual displayed; and
Fig. 14 is a view showing a picture surface with a page of an order sheet displayed.

### Best Mode for Carrying Out the Invention

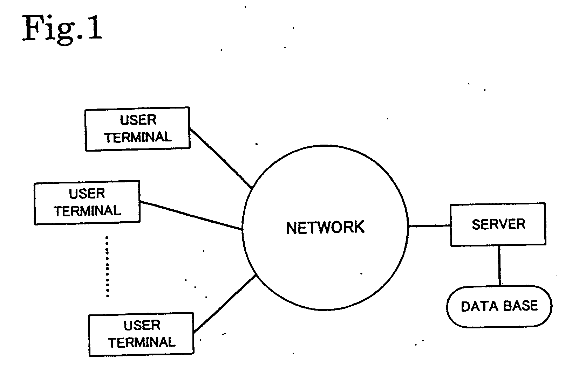

Hereinafter, an embodiment of the present invention will be described with reference to Figs. 1 to 14. The embodiment relates to a vehicle such as a motorcar and a motorcycle or a general machine, and relates to a system for carrying out retrieve and order of parts and a maintenance manual of the vehicle or the machine.

Fig. 1 shows an entire system for parts retrieve, maintenance materials retrieve and electronic commercial transaction utilizing a network.

The network is an existing network such as the internet. A server and a user terminal can communicate with each other through the network.

The server is provided with a customer data base recorded with ID (including password), name, address, correspondence address etc. of each customer and sort, type and year of vehicle of each customer in combination, and a product-parts data base having parts lists and service manuals for various vehicle sorts including picture data recorded so as to be retrieved. Regarding the parts list and the service manual, always the latest issue is supplied.

Further, the server has a maintenance shop data base recorded with addresses and correspondence addresses of maintenance shops and selling shops, and other data such as URL if the shops have home pages (web-site). The server has a function (program) for extracting pertinent data from the customer data base, the product-parts data base and the maintenance shop data base and outputting the data as occasion demands.

On the one hand, the user terminal is a personal computer existing at user's home or a portable telephone. Sometimes the user terminal is a computer set up at a convenience store or the like.

The server and the user terminal have respective communication functions and can communicate with each other through the network. In the server, web-serve-program operates, and in the user terminal, web-blouser-program operates.

Regarding retrieve of maintenance data, firstly parts are specified and then the retrieve is carried out from the service manual based on the specified parts.

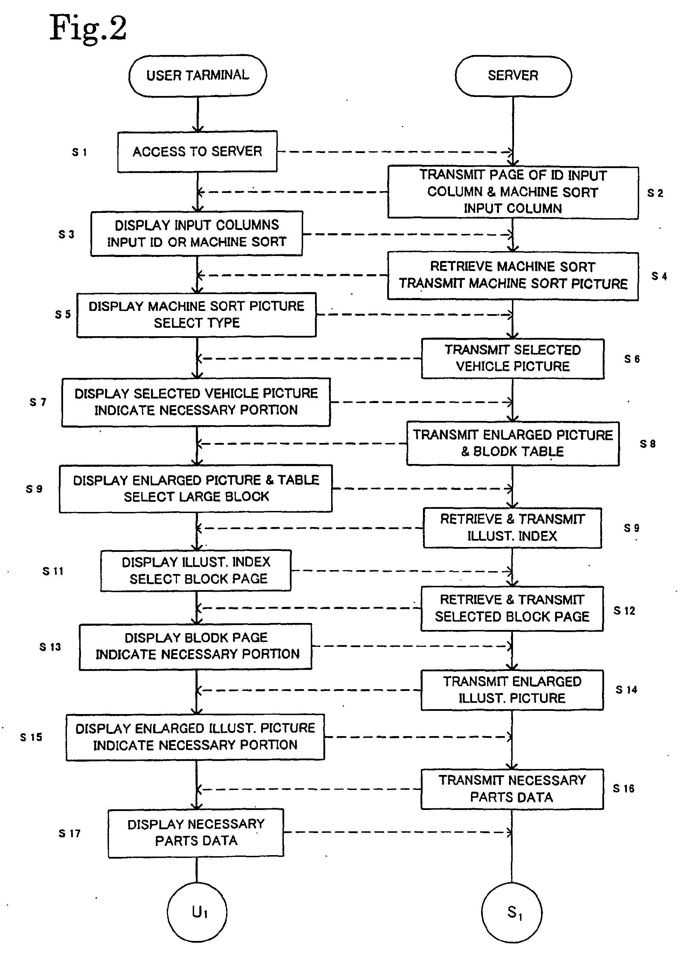

Accordingly, an operation that the user communicates with the server through the network for retrieving necessary parts from the server's data base will be described with reference to operation procedure shown in Fig. 2.

The above-mentioned parts include an article to be attached to a product such as an accessory.

Firstly, a user inputs server's URL from the user terminal to obtain access to the server (Step S1).

The server transmits a page having an ID input column and a machine sort input column to the user terminal (Step S2).

Alternatively, a top page of the server is transmitted immediately after the user obtains access to the server, and the page having the ID input column and the machine sort input column is transmitted when the user selects parts retrieve on the top page.

The user terminal displays the input columns on a display picture surface (Step S3).

The user inputs ID or machine sort at the input picture surface (Step S3).

If a user was registered as user and obtained ID previously when he purchased the vehicle, data of the purchased vehicle are recorded in the customer data base together with his personal data such as name. Therefore, a vehicle relating to parts to be retrieved can be specified quickly and exactly by only inputting ID. A user who is not registered as user must input machine sort. If there is any information for specifying the vehicle other than the machine sort, it may be designed so that the information also can be inputted in order to specify the vehicle easily.

When an information of ID or machine sort is transmitted to the server, the server retrieves machine sort picture corresponding to the inputted ID or the inputted machine sort from the customer data base or the product-parts data base based on the information (Step S4). The user terminal displays the transmitted machine sort picture (Step S5).

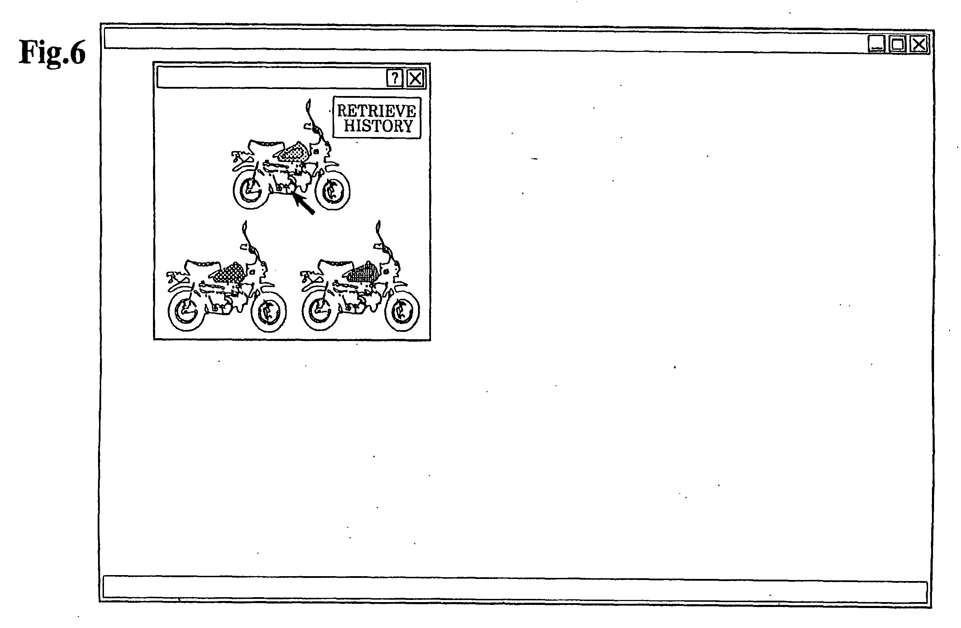

Fig. 6 shows an example of a picture surface displayed with a machine sort picture of motorcycle. In this case, there are three types belonging to the same machine sort, and each type is distinguished by color of a fuel tank. If a type of vehicle relating to parts to be retrieved is indicated by a mouse pointer and clicked to select the type (Step S5), the server receiving the selecting information transmits a large picture showing only selected vehicle (Step S6).

A "RETRIEVE HISTORY" button shown on the picture surface of Fig. 6 is used as follows. In case that retrieve regarding the same machine sort was carried out once, if the button is clicked, data of parts retrieved in past is displayed and time for retrieving again can be saved. Operation procedure for this will be described later.

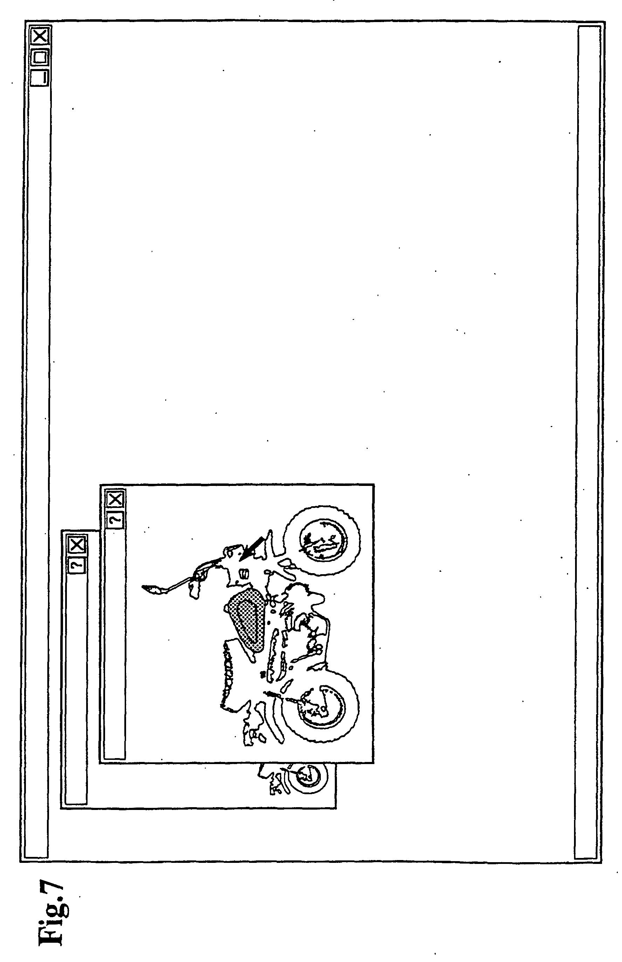

When the server transmits the large picture of only the selected vehicle at Step S6, On the user terminal side, the picture of the selected vehicle is displayed (Step S7). Fig. 7 shows an example of the picture surface with the selected vehicle picture displayed. In place of the enlarged picture, a perspective picture showing the vehicle viewed from an obliquely upper position may be displayed so that a feature of the vehicle can be caught more easily, or plural pictures viewed from plural view points may be displayed.

The user indicates and clicks with a mouse pointer a rough portion that parts to be retrieved seems to be fitted of the vehicle picture on the display surface for transmitting a portion indicating information to the server (Step S7). The server receives the picture indicating information and transmits an enlarged picture and a block table of the indicated portion to the user terminal (Step S8). The user terminal displays the enlarged picture and the block table (Step S9).

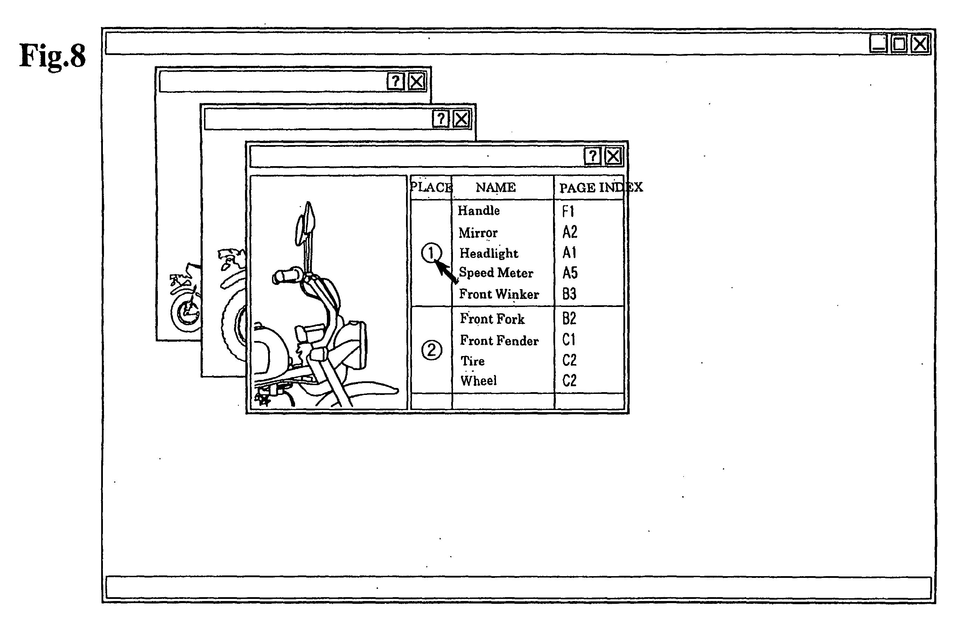

Fig. 8 shows an example of the picture surface displayed with the enlarged picture and the block table. The user indicates with the mouse pointer a portion of the enlarged picture relating to parts to be retrieved or indicates with the mouse pointer a large block portion of the block table relating parts to be retrieved, for selecting a large block (Step S9). When the mouse pointer positions at any large block of the block table, color of a portion corresponding to the large block may be changed.

The server receiving the selecting information retrieves an illustration index corresponding to the large block selecting information from a parts list of the product-parts data base and transmits the illustration index to the user terminal (Step S10). The user terminal displays the illustration index transmitted from the user (Step S11).

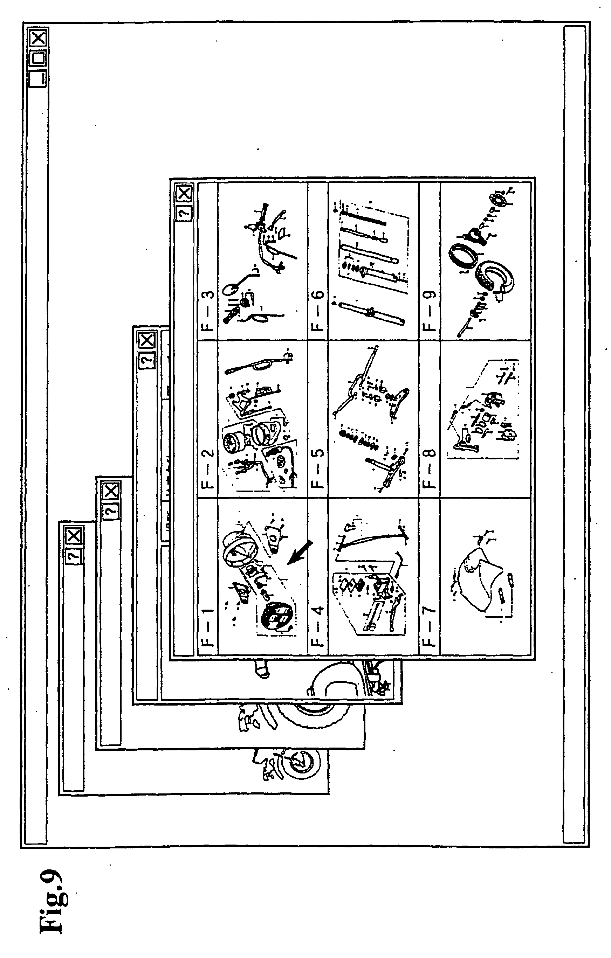

Fig. 9 shows an example of the picture surface displayed with the illustration index. The user watching the illustration index indicates and clicks with the mouse pointer a block including parts to be retrieved for selecting a necessary block and transmitting block selecting information (Step S11)

The server receiving the block selecting information transmits a picture of a page relating to the selected block of the parts list (Step S12). The user terminal displays the required block page of the parts list transmitted from the server (Step S13).

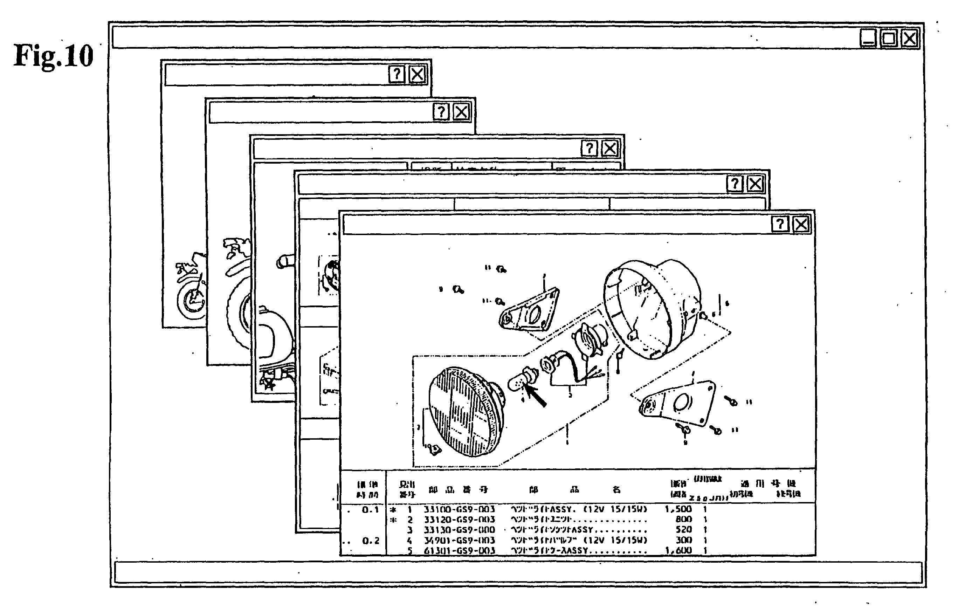

Fig. 10 shows an example of the picture surface with the required block page displayed. A necessary parts group is displayed by an exploded perspective view and a parts column is displayed.

The user may specify parts to be retrieved by indicating with the mouse pointer the corresponding parts number portion or parts on the picture, if possible. When the user wants to specify the parts to be retrieved more exactly by an enlarged picture, a portion of the illustration picture where the parts to be retrieved exist is indicated and clicked by the mouse pointer for portion indication (Step S13)

The server receiving the portion indicating information transmits an illustration picture showing the indicated portion enlarged (Step S14). The user terminal displays the enlarged illustration picture transmitted from the server (Step S15).

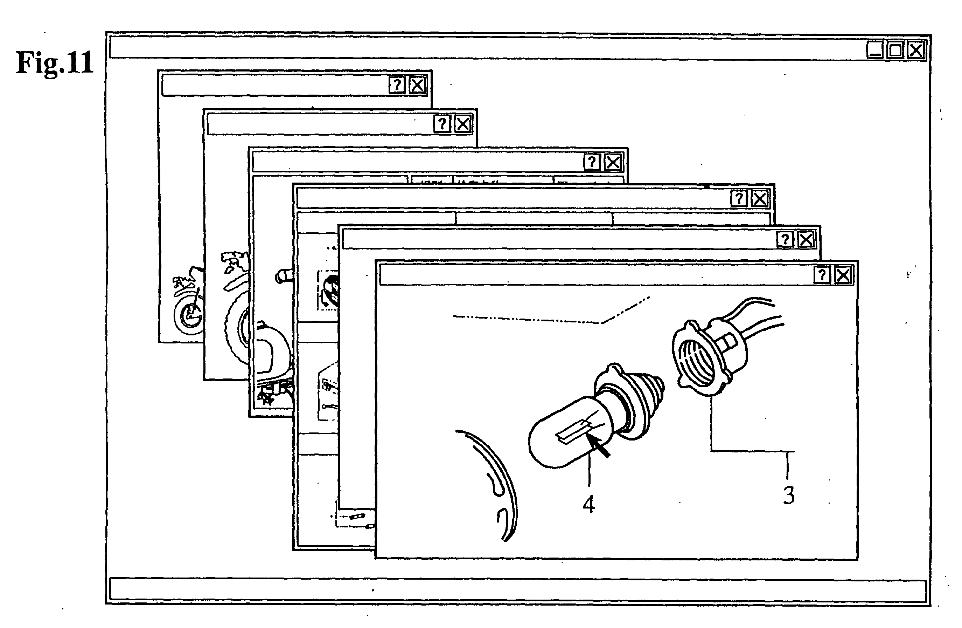

Fig. 11 shows an example of the picture surface displayed with the enlarged illustration picture. On this picture surface, a necessary individual parts is indicated and clicks with the mouse pointer for specifying (Step S15).

The server receiving the parts indicating information transmits parts data of the specified parts (Step S16). The user terminal displays the parts data transmitted from the server.

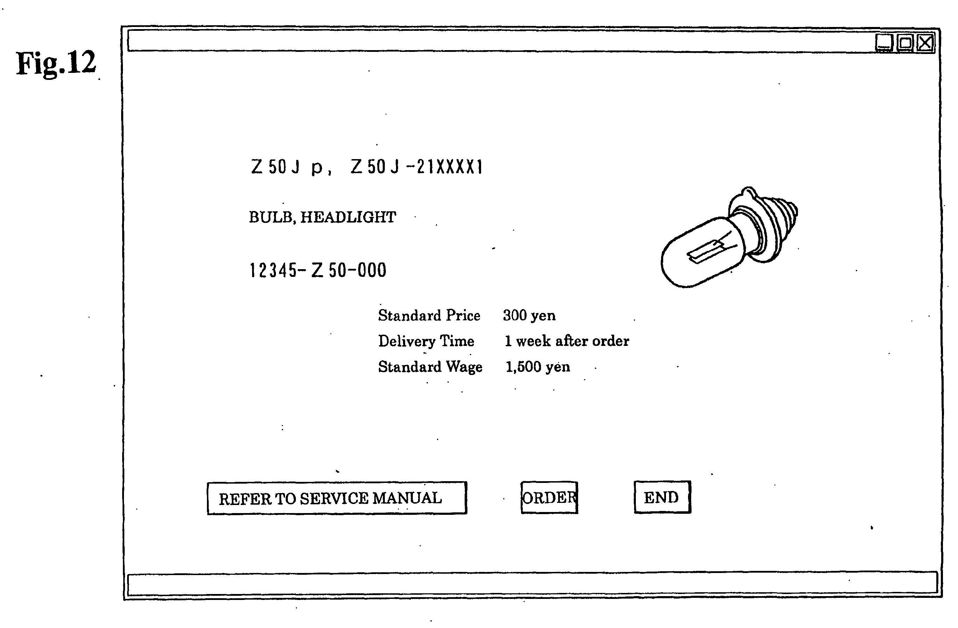

Fig. 12 shows an example of the picture surface displayed with the parts data. Since an illustration picture is displayed together with name and number of the parts, the parts can be confirmed exactly. Further, price, time of delivery and standard wages are also displayed.

As described above, the user confirms the product watching an exact picture based on proper part list and service manual transmitted from the server through the network, and specifies necessary parts indicating with the mouse pointer portions of the product pictures having parts to be retrieved in turn. Therefore, exact necessary parts can be specified easily and exact parts data can be obtained quickly.

On the picture surface with parts data displayed shown in Fig. 12, "REFER TO SERVICE MANUAL" button and "ORDER" button are provided. By clicking the "REFER TO SERVICE MANUAL" button, a service manual relating to the retrieved parts can be referred. By clicking the "ORDER" button, the retrieved parts can be ordered.

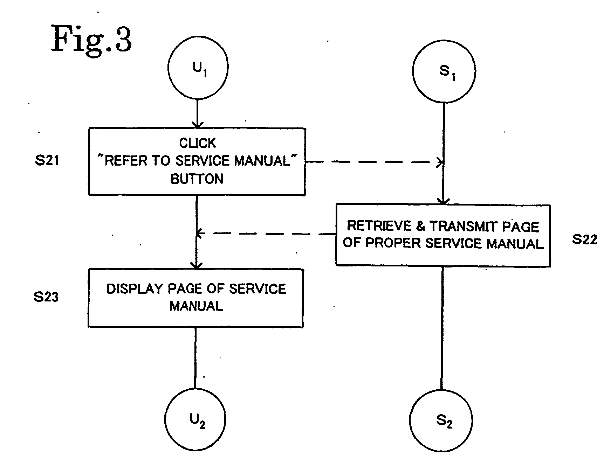

Fig. 3 shows operation procedure at the time when the service manual is referred to. If the user clicks the "REFER TO SERVICE MANUAL" button on the picture surface displaying parts data, a corresponding indicating information is transmitted to the server. The server retrieves and selects a proper service manual from the product-parts data base based on the parts data, extracts a page of the service manual relating the parts data and transmits the page to the user terminal (Step S22). The user terminal displays the page transmitted from the server (Step S23).

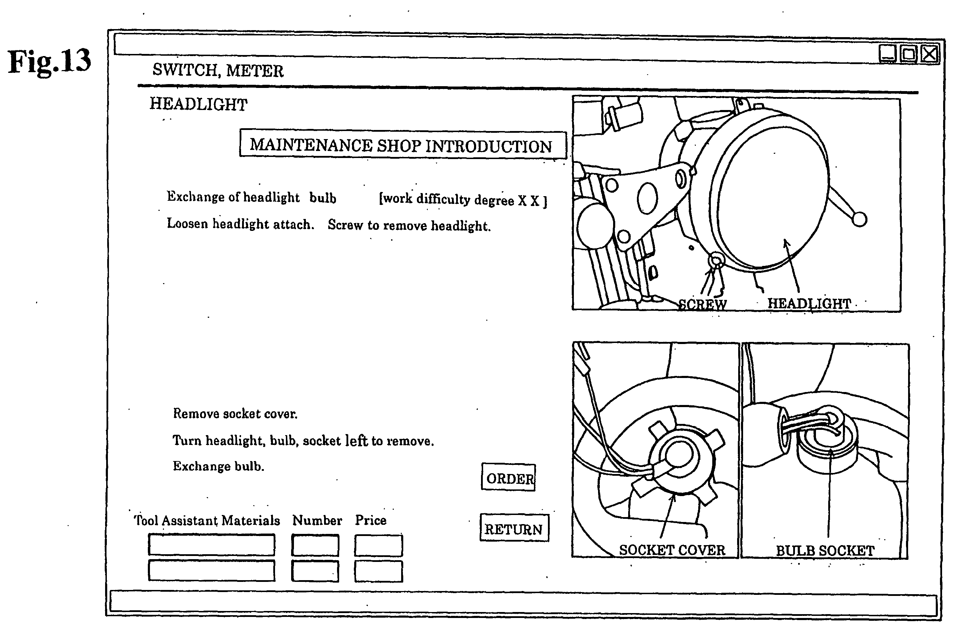

Fig. 13 shows an example of the picture surface displayed with a necessary page of the service manual. In this example, parts to be retrieved is a bulb of a headlight and a page explaining a method for exchanging the bulb is displayed. An explanation text is described together with pictures of necessary places. The user exchanges the obtained bulb watching the page. The page may be printed conveniently.

On the picture surfaces of the service manual is displayed work difficulty degree, so that general users can grasp difficulty of the work at a look. Therefore, the user can judge easily whether he can accomplish the work or not in view of his own technical skill based on the work difficulty degree. When he judges it is difficult, ordering the parts is futile, therefore he leaves the exchange to a maintenance shop or a selling shop.

For this purpose, the picture surface (Fig. 13) is provided with "MAINTENANCE SHOP INTRODUCTION" button. If the button is clicked, data of a nearest maintenance shop is retrieved from the maintenance shop data base and displayed. Further, since URL of a maintenance shop having home page is also displayed and linked, it is possible to obtain access to web server of the maintenance shop from the picture surface directly.

When the work needs special tool, jig, assistance material such as adhesive or protector, a portion displayed with name and picture of such tool or the like is provided in the explanation text or the picture. Therefore, when the user wants to order the above tool or the like together with the parts, he clicks the above portion. As the result, the tool or the like is displayed at an insertion column provided at a lower position of the picture surface together with number and price. The insertion column for the tool or the like may be provided on the picture surface of Fig. 12 too.

The user can order by clicking "ORDER" button on the picture surface of Fig. 13. When the picture surface has been used only for reference, the user clicks "RETURN" button to return to the preceding page.

Since by the simple operation that "REFER TO SERVICE MANUAL" button is clicked at the picture surface with the parts data displayed, an exact page of the service manual relating the retrieved parts is retrieved for reference, the user can understand a method for attaching the parts without necessitating time and labor.

Since work difficulty degree is displayed on the page picture surface of the service manual, the user can judge easily whether he can carry out the work himself or not, and can obtain easily information of a nearest maintenance shop when he wants to leave the work to a maintenance shop.

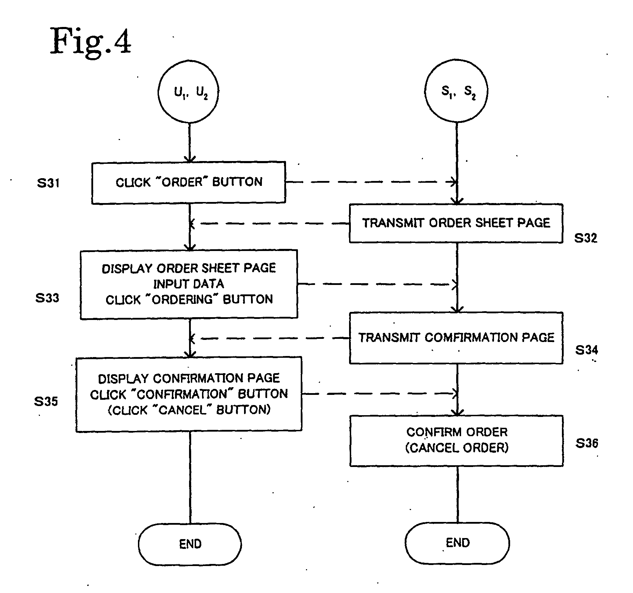

Fig. 4 shows operation procedure for ordering the parts or the like. When "ORDER" button is clicked at the picture surface of Fig. 12 with the parts data displayed or at the picture surface of Fig. 13 with the necessary page of the service manual displayed (Step S31), order request information is transmitted to the server, and the server transmits an order sheet page to the user terminal (Step S32). The user terminal displays the transmitted order sheet page (Step S33).

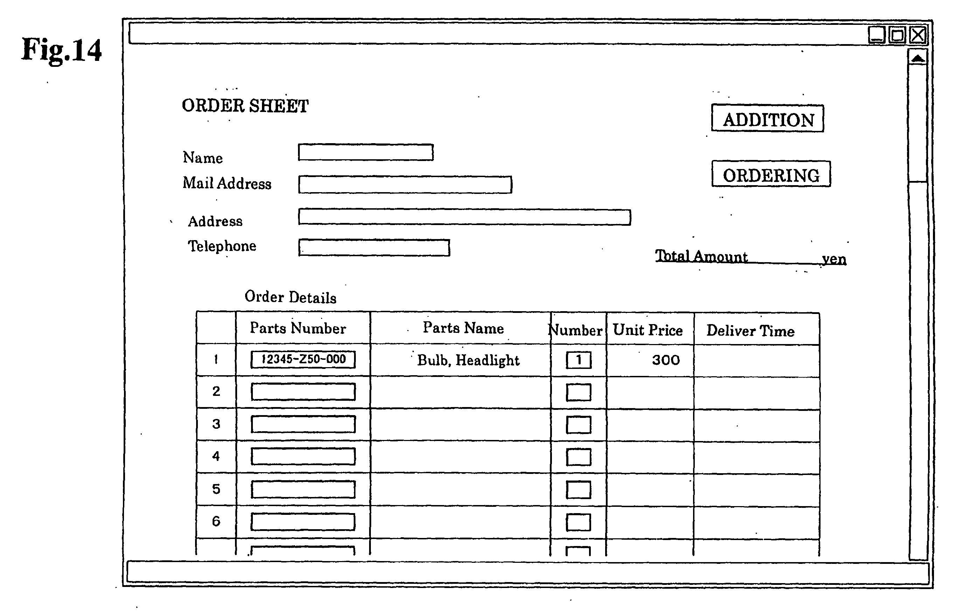

Fig. 14 shows an example of the picture surface with the order sheet page displayed. In columns of order details of the order sheet picture surface, data of the parts or the like indicated at the previous steps have been wrote in already. Cancellation or correction of the number for example can be done freely. Since parts number etc. is wrote in automatically, no posting miss occurs. In case that the orderer has been registered as user, his data such as name and address are retrieved from the customer data base and wrote in automatically. An orderer not registered as user inputs his address etc. The order sheet page is provided with also columns regarding selection of way of payment and selection of way of delivery though these columns are not shown in Fig. 14.

If contents of the order sheet are not erroneous, "ORDERING" button is clicked to transmit order data to the server (Step S33). When the user wants to add another parts before ordering, "ADDITION" button is clicked. Then the picture surface returns to the page with selected vehicle picture displayed of the Step S7 for example so that another parts can be retrieved and ordered.

The server receives the order data and transmits a page for confirmation of the order to the user terminal (Step S34). The user terminal displays the order confirmation page transmitted from the server.

The order confirmation page describes contents of the order sheet, and the user confirms whether the contents are erroneous or not. If the contents are not erroneous, he clicks a "CONFIRMATION" button (Step S35), and if erroneous, he correct the error then clicks the "CONFIRMATION" button. When he wants to cancel the order, he clicks a "CANCEL" button. The server receives confirmation or cancel information from the user terminal, and confirms and formally accept the order or cancels the order (Step S36).

Thus, quick and exact retrieve of necessary parts and successive order of the parts and necessary tools can be carried out easily through the network by clicking the buttons. The server side delivers the ordered goods by directed delivering way. When a user who has been registered as user carries out the above-mentioned retrieve of parts, history of retrieve is recorded in the customer data base together with data of retrieved parts.

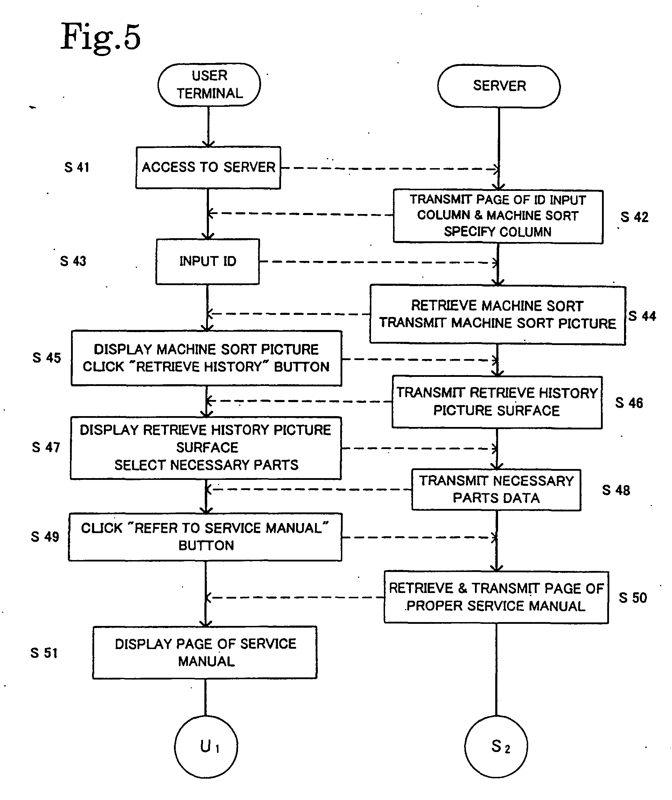

When the user wants to know method for attaching parts retrieved once, reference of the service manual is carried out according to the operation procedure shown in Fig. 5.

When the user obtains access to the server from the user terminal (Step S41), the server transmits a page having an ID input column and a machine sort input column to the user terminal (Step S42). The user terminal displays the input columns on the picture surface, therefore the user input ID (Step S43).

Then, the server transmits a picture of machine sort corresponding to the inputted ID (Step S44), and the user terminal displays the machine sort picture (Step S45).

This procedure is the same as that from S1 to S5.

A machine sort picture as shown in Fig. 6 is displayed at the user terminal. Here, "RETRIEVE HISTORY" button displayed on the picture surface is clicked (Step S45). The server side transmits a picture surface of history of parts retrieves the user carried out once (Step S46) and the user terminal displays retrieve history with data of parts retrieved once enumerated (Step S47). The user selects necessary retrieved parts by clicking to transmit select information to the server, and the server transmits parts data of the necessary parts (Step S48).

Step S48 corresponds to the aforementioned Step S16. The user terminal displays the parts data picture surface as shown in Fig. 12 (Step S49). The user confirms the parts and clicks "REFER TO SERVICE MANUAL" button (Step S49). The server selects a proper service manual and transmits a page of the service manual relating to the parts data to the user terminal as described above (Step S50). The server terminal displays the necessary page pf the service manual transmitted from the server (Step S51).

Thus, in case that a user registered as user refers to the service manual for confirming attachment method of a parts retrieved in the past, necessary parts can be specified quickly by the simple operation to click the "RETRIEVE HISTORY" button without carrying out retrieve of the parts again. Further, by clicking the "REFER TO SERVICE MANUAL" button, a page having necessary information of a proper service manual can be displayed quickly and very conveniently.

The input column displayed at Step S3 includes a column to input parts number or the like, therefore, in case that parts number or the like capable of specifying necessary parts is known in advance, the parts number or the like can be inputted into the column for direct display of parts data picture surface. Therefore, work for retrieving parts can be saved and order of necessary parts and referring to relating service manual can be carried out more quickly.

The present invention is not limited to vehicle parts of the above-mentioned embodiment, but also can be applied to parts of other product generally.

### Industrial Applicability

The present invention can be applied to retrieve parts and maintenance materials using a network.

## Claims

1. A parts retrieving system including a server and a user terminal capable of communicating with each other through a network,
said server comprising:
a product-parts data base having complete data of products and parts recorded so as to be retrieved including picture data of said products and said parts;
retrieve means for retrieving from said product-parts data base, product picture data responding to product specifying information transmitted from said user terminal for specifying a product relating to parts to be retrieved, parts group picture data responding to parts group indicating information transmitted from said user terminal for indicating a required parts group, and parts data responding to parts indicating information transmitted from said user terminal for indicating parts to be retrieved; and
server side transmission means for transmitting said product picture data, said parts group picture data and said parts data retrieved by said retrieve means to said user terminal,
said user terminal comprising:
display means for displaying said product picture data , said parts group picture data and said parts data transmitter from said server side transmission means on a display surface; and
user side transmission means for transmitting said product specifying information, said parts group indicating information and said parts indicating information to said server.

2. A parts retrieving system including a server and a user terminal capable of communicating with each other through a network,
said server comprising:
a product-parts data base having complete data of products and parts recorded so as to be retrieved including picture data of said products and said parts;
retrieve means for retrieving from said product-parts data base, product picture data responding to product specifying information transmitted from said user terminal for specifying a product relating to parts to be retrieved, enlarged picture data responding to enlarged picture indicating information transmitted from said user terminal for indicating a required portion of said product picture, parts group picture data responding to parts group indicating information transmitted from said user terminal for indicating a required parts group, and parts data responding to parts indicating information transmitted from said user terminal for indicating parts to be retrieved; and
server side transmission means for transmitting said product picture data, said enlarged picture data, said parts group picture data and said parts data retrieved by said' retrieve means to said user terminal,
said user terminal comprising:
display means for displaying said product picture data, said enlarged picture data, said parts group picture data and said parts data transmitted from said server side transmission means on a display surface; and
user side transmission means for transmitting said product specifying information, said enlarged picture indicating information, said parts group indicating information and said parts indicating information to said server.

3. A server comprising:
a product-parts data base having complete data of products and parts recorded so as to be retrieved including picture data of said products and said parts;
retrieve means for retrieving from said product-parts data base, product picture data responding to product specifying information transmitted from a user terminal through a network for specifying a product relating to parts to be retrieved, parts group picture data responding to parts group indicating information transmitted from said user terminal through said network for indicating a required parts group, and parts data responding to parts indicating information transmitted from said user terminal through said network for indicating parts to be retrieved; and
transmission means for transmitting said product picture data, said parts group picture data and said parts data retrieved by said retrieve means to said user terminal.

4. A server comprising:
a product-parts data base having complete data of products and parts recorded so as to be retrieved including picture data of said products and said parts;
retrieve means for retrieving from said product-parts data base, product picture data responding to product specifying information transmitted from a user terminal through a network for specifying a product relating to parts to be retrieved, parts group picture data responding to parts group indicating information transmitted from said user terminal through said network for indicating a required parts group, and parts data responding to parts indicating information transmitted from said user terminal through said network for indicating parts to be retrieved;
transmission means for transmitting said product picture data, said parts group picture data and said parts data retrieved by said retrieve means to said user terminal;
order sheet transmitting means for transmitting an order sheet to said user terminal responding to order requirement transmitted from said user terminal; and
order accepting means for accepting said order sheet with said retrieved parts data wrote in transmitted from said user terminal.

5. A server comprising:
a product-parts data base having complete data of products and parts so as to be retrieved including picture data of said products and said parts;
a customer data base with data of customers recorded;
retrieve means for retrieving, from said customer data base and said product-parts data base, product picture data responding customer information transmitted from a user terminal through a network, and retrieving from said product-parts data base, parts group picture data responding to parts group indicating information transmitted from said user terminal for indicating required parts group relating to parts to be retrieved, and parts data responding to parts indicating information transmitted from said user terminal for indicating parts to be retrieved; and
transmission means for transmitting said product picture data, said parts group picture data and said parts data retrieved by said retrieve means to said user terminal in a mode that said data can be displayed at said user terminal.

6. A server as claimed in claim 3, 4 or 5, wherein said product-parts data base includes complete data of products and parts comprising a parts list and a service manual.

7. A user terminal comprising:
access means for obtaining access to a server having product-parts data base with complete data of products and parts recorded so as to be retrieved including picture data of said products and said parts;
display means for displaying product picture data, parts group picture data and parts data transmitted from said server on a display surface;
transmitting means for transmitting product specifying information for specifying product picture to be displayed by said display means, parts group indicating information for indicating required portion of said displayed product picture and parts indicating information for indicating required parts of said displayed parts group picture to said server.

8. A record medium housing a program for controlling a computer so that:
said computer responds to product specifying information relating to parts to be retrieved transmitted from a user terminal through a network and retrieve, from a product-parts data base having complete data of products and parts recorded so as to be retrieved including picture data of said products and said parts, corresponding product picture data to transmit said product picture data;
said computer responds to information indicating a required portion of said transmitted product picture data and retrieves from said product-parts data base parts group picture data of said indicated portion to transmit said parts group picture data; and
said computer responds to information indicating parts in said transmitted parts group picture data and retrieves from said product-parts data base parts data of said indicated parts to transmit said parts data.

9. A maintenance materials retrieving system including a server and a user terminal capable of communicating with each other through a network,
said server comprising:
a product-parts data base having complete data of products and parts recorded so as to be retrieved including maintenance materials relating to a maintenance method;
retrieve means for retrieving from said product-parts data base parts data and maintenance data relating to parts corresponding to parts specifying information transmitted from said user terminal for specifying said parts; and
server side transmission means for transmitting said maintenance data retrieved by said retrieve means to said user terminal,
said user terminal comprising:
display means for displaying said maintenance data transmitted by said server side transmission means on a display surface; and
user side transmission means for transmitting said parts specifying information to said server.

10. A maintenance materials retrieving system as claimed in claim 9, wherein said maintenance data include degree of difficulty of work.

11. A maintenance materials retrieving system as claimed in claim 9, wherein said maintenance data include information of maintenance shops.

12. A maintenance materials retrieving system as claimed in claim 9, wherein said product-parts data base includes complete data of products and parts comprising parts lists and service manuals.

13. A server comprising:
a product-parts data base having complete data of products and parts recorded so as to be retrieved including maintenance materials relating a maintenance method;
retrieve means for retrieving from said product-parts data base parts data and maintenance data relating to parts corresponding to parts specifying information transmitted from a user terminal through a network for specifying said parts; and
server side transmission means for transmitting said maintenance data retrieved by said retrieve means to said user terminal.

14. A server comprising:
a product-parts data base having complete data of products and parts recorded so as to be retrieved including maintenance materials relating a maintenance method;
storage means for storing a history of retrieves of parts carried out by a user;
retrieve means for retrieving from said product-parts data base maintenance data relating to parts corresponding to parts selecting information transmitted from a user terminal through a network for selecting said parts from said history of retrieves; and
server side transmission means for transmitting said maintenance data retrieved by said retrieve means to said user terminal.

15. A user terminal comprising:
access means for obtaining access to a server through a network;
transmission means for transmitting parts specifying information to said server; and
display means for displaying maintenance data transmitted from said server,
said server comprising product-parts data base having complete data of products and parts recorded so as to be retrieved including maintenance materials relating to a maintenance method.

16. A user terminal as claimed in claim 15 having print means for printing picture of said maintenance data displayed by said display means.

17. A record medium housing a program for controlling a computer so that parts specifying information transmitted from a user terminal through a network is received, and corresponding parts data and maintenance data are retrieved based on said transmitted parts specifying information from a product-parts data base having complete data of products and parts recorded so as to be retrieved including maintenance materials relating to a maintenance method.
